# EUROPÄISCHE PATENTANMELDUNG

(11) **EP 4 011 235 A1**
(43) Veröffentlichungstag der Anmeldung: **15.06.2022**
(21) Anmeldenummer: 21213410.0
(22) Anmeldetag: 09.12.2021
(51) Int. Cl.: A43B 13/12, A43B 13/38, A43B 17/00, B33Y 80/00

(54) **VERFAHREN ZUM HERSTELLEN EINER SCHUHSOHLE**

(30) Priorität: 11.12.2020 DE 102020133151
(71) Anmelder: Sneakprint GmbH, 80331 München (DE)
(72) Erfinder: Zürn, Kevin, 80809 München (DE)
(74) Vertreter: Feller, Frank

(57) **Zusammenfassung**

Die vorliegende Erfindung betrifft ein Verfahren zum Herstellen einer Schuhsohle (10) für einen Schuh, umfassend die Schritte eines Erstellens eines individuellen Datensatzes für einen vorgesehenen Träger des Schuhs, welcher Informationen hinsichtlich einer gewünschten Oberflächenprofilierung eines Fußbetts (16) der Schuhsohle (10) und/oder hinsichtlich eines Festigkeitskennfelds des Fußbetts (16) der Schuhsohle (10) umfasst, eines Bereitstellens einer Bodensohle (12), eines Herstellens des Fußbetts (16) mittels eines additiven Herstellungsverfahrens anhand des individuellen Datensatzes und eines Aufbringen des Fußbetts (16) auf die Bodensohle (12). Weiterhin betrifft die Erfindung eine derart hergestellte Schuhsohle, ein Verfahren zum Herstellen eines Schuhs mit einer derartigen Schuhsohle sowie den so hergestellten Schuh

## Beschreibung

Die vorliegende Erfindung betrifft ein Verfahren zum Herstellen einer Schuhsohle für einen Schuh, eine derart hergestellte Schuhsohle sowie ein Verfahren zum Herstellen eines Schuhs mit einer in dieser Weise hergestellten Schuhsohle und einen derart hergestellten Schuh.

Es ist aus dem Stand der Technik bekannt, maßgefertigte orthopädische Fußbetten als Einlagesohlen in herkömmlich hergestellte Schuhe nachträglich einzulegen oder, im Fall maßgefertigter orthopädischer Schuhe, bei der Schuhherstellung in den ansonsten herkömmlichen Schuh fest einzuarbeiten. Hierbei ist insbesondere die Herstellung maßgefertigter orthopädischer Schuhe aufwendig und teuer, während lediglich maßgefertigte orthopädische Einlagen hingegen vielfach nur mäßig an die zusammen damit verwendeten Schuhe angepasst sind und daher weder einen optimalen Tragekomfort noch optimale orthopädische Eigenschaften aufweisen können.

Wie bei vielen Klassen von individuell herzustellenden Gegenständen bietet sich auch im Bereich der Schuhsohlen und Schuhe eine individuelle Fertigung davon mittels sog. additiver Herstellungsverfahren an, in welchen fertige Teile nicht aus größeren Halbstücken oder dergleichen heraus mittels materialabtragender Verfahren geformt werden, sondern von Grund auf durch gezieltes Anlagern und Verfestigen von Baumaterial aufgebaut werden.

Im Gegensatz zu beispielsweise einem Spritzgießen oder vergleichbaren Herstellungsverfahren ist es in derartigen additiven Prozessen von vornherein vorgesehen, die entstehenden Produkte zu individualisieren, da jeder einzelne Herstellungsvorgang anhand eines hierfür vorgesehenen Datensatzes individuell durchgeführt werden kann und demzufolge keine Werkzeuge oder Formen anzuschaffen sind, welche lediglich bei einer Herstellung größerer Stückzahlen wirtschaftlich tragbar sind.

Zwar ist verschiedentlich vorgeschlagen worden, personalisierte Produkte auch im Bereich der Schuhherstellung anzubieten, hierbei handelte es sich jedoch bisher stets entweder um vollständig mittels additiver Verfahren hergestellte Schuhe oder lediglich einzelne Teilstücke davon wie beispielsweise Einlagen, eine Mittelsohle oder eine Außensohle, es ist jedoch noch nie eine Schuhsohle in einer derartigen Weise hergestellt worden.

Dementsprechend ist es die Aufgabe der vorliegenden Erfindung, eine Schuhsohle für einen Schuh in einer individualisierten und auf einen vorgesehenen Träger abgestimmten Weise herzustellen und hierbei kosten- und zeitsparend vorzugehen.

Dementsprechend umfasst das erfindungsgemäße Verfahren zum Herstellen einer Schuhsohle für einen Schuh, insbesondere einer einteiligen Schuhsohle, die Schritte eines Erstellens eines individuellen Datensatzes für einen vorgesehenen Träger des Schuhs, welcher Informationen hinsichtlich einer gewünschten Oberflächenprofilierung eines Fußbetts der Schuhsohle und/oder hinsichtlich eines Festigkeitskennfelds der Schuhsohle umfasst, eines Bereitstellens einer Bodensohle, eines Herstellens des Fußbetts mittels eines additiven Herstellungsverfahrens anhand des individuellen Datensatzes und eines Aufbringens des Fußbetts auf die Bodensohle.

Indem auf diese Weise das maßzufertigende Fußbett unmittelbar auf der Innenseite der Bodensohle angeordnet wird, wird eine Schuhsohle, insbesondere eine einteilige Schuhsohle, mit den gewünschten Eigenschaften erzeugt, wobei das Fußbett unter orthopädischem Wissen personalisiert und korrigiert mittels des angesprochenen additiven Herstellungsverfahrens anhand des individuellen Datensatzes des vorgesehenen Trägers erstellt wird. Auf diese Weise wird der korrekte Sitz des Fußbetts gegenüber dem Fuß von vornherein sichergestellt, da kein Verrutschen des Fußbetts gegenüber der Bodensohle auftreten kann und somit der gewünschte orthopädische Effekt in optimaler Weise eintreten wird.

Wenngleich in bestimmten Ausführungsformen der vorliegenden Erfindung die Bodensohle in einer Weise bereitgestellt werden kann, dass beispielsweise anhand des herzustellenden Fußbetts eine vorgefertigte Bodensohle aus einer Mehrzahl zur Verfügung stehender Bodensohlen anhand von Eigenschaften wie Abmessungen des Fußbetts ausgewählt wird und somit auf eine vorgefertigte Komponente zurückgegriffen werden kann, so kann in einer besonders bevorzugten Ausführungsform das Bereitstellen der Bodensohle ebenfalls ein Herstellen davon mittels eines additiven Herstellungsprozesses umfassen.

Alternativ oder zusätzlich kann das Herstellen des Fußbetts mittels des additiven Herstellungsverfahrens direkt auf der Bodensohle stattfinden, d. h. dass entweder der additive Aufbau des Fußbetts auf einer vorgefertigten und hierzu zugeführten Bodensohle beginnen und zu Ende geführt werden kann, andererseits kann jedoch auch ein einzelner additiver Herstellungsprozess vorgesehen werden, in welchem zunächst die Bodensohle und dann das Fußbett gebildet wird oder andersherum. Auf diese Weise besteht bei der Herstellung der Schuhsohle volle Prozesskontrolle beim Durchführen des additiven Herstellungsverfahrens und es kann erwartet werden, dass derart hergestellte Schuhsohlen mit höchster Präzision und geringsten Toleranzen ausgeführt werden können.

Hierbei kann das Fußbett und/oder die Bodensohle abschnittsweise als eine Gitterstruktur ausgebildet werden und/oder das Fußbett mit einer durchgehenden Oberseite ausgebildet werden, wobei die Gitterstruktur vorzugsweise ebenfalls anhand des individuellen Datensatzes hergestellt wird. Eine derartige Gitterstruktur hat zum Einen den Vorteil, dass hierdurch das Gesamtgewicht der Schuhsohle reduziert wird, indem die entstehenden Freiräume lediglich mit einem Gas und nicht mit Material gefüllt sind, und andererseits bestehen durch Einstellung der Eigenschaften der Gitterstruktur, wie zum Beispiel der Wandstärken, der Abstände und der Kreuzungswinkel der einzelnen gitterbildenden Elemente weitere Möglichkeiten zur individuellen Anpassung der Eigenschaften der Schuhsohle, beispielsweise hinsichtlich ihres Dämpfungskennfelds über den Verlauf des Fußes des Trägers.

Um ein solches gewünschtes Festigkeitskennfeld zu erreichen, können die möglichen Eigenschaften der Gitterstruktur bei der Umsetzung des individuellen Datensatzes herangezogen und mehrdimensional optimiert werden, sodass beispielsweise beim Vorliegen von Bereichen mit einer höheren gewünschten Dämpfung des Fußbetts an diesen Stellen die Wandstärke der Gitterstruktur verringert oder die Abstände zwischen den gitterbildenden Elementen vergrößert werden können. Wenngleich selbstverständlich nicht ausgeschlossen ist, dass sich die Gitterstruktur bis zur Oberseite des Fußbetts erstreckt, sodass dort die oberste Gitterschicht freiliegt, so kann es in anderen Ausführungsformen wünschenswert sein, das Fußbett mit einer durchgehenden Oberfläche bereitzustellen, beispielsweise um ein Eindringen von Fremdkörpern in die Gitterstruktur oder erhöhten Verschleiß davon zu verhindern.

In einer Weiterbildung kann das erfindungsgemäße Verfahren ferner einen Schritt einer Endbearbeitung des Fußbetts umfassen, beispielsweise eines Schleifens oder Fräsens davon, um unter Umständen nach der additiven Herstellung davon noch vorliegende Abweichungen von einer gewünschten Form zu korrigieren.

Alternativ oder zusätzlich kann die bereitzustellende Bodensohle an ihrer Unterseite eine Profilierung aufweisen oder in einem Schritt des Verfahrens mit einer solchen versehen werden und/oder mittels einer Veredelungstechnik haltbar und abriebfest gemacht werden. Auch das Versehen der Bodensohle mit einer Profilierung kann beispielsweise durch ein Schneiden oder Fräsen davon mit einem geeigneten Muster stattfinden, während die Veredelungstechnik beispielsweise eine Infiltrierung von Silikon, ein Aufrauhen wenigstens einiger Abschnitte davon und/oder ein Aufbringen einer abriebsfesten Beschichtung und dergleichen umfassen kann.

Wenngleich selbstverständlich denkbar ist, sowohl die Bodensohle als auch das Fußbett aus einem identischen Material herzustellen, was insbesondere beim vollständigen Aufbau der erfindungsgemäßen Sohle in einem einzelnen additiven Fertigungsverfahren zu einer weiteren Beschleunigung und Kosteneinsparung führen kann, so können in anderen Ausführungsformen die Bodensohle und das Fußbett unterschiedliche Materialeigenschaften aufweisen, insbesondere hinsichtlich ihrer Festigkeit und/oder ihrer Elastizität. Hierdurch werden weitere anpassbare Parameter geschaffen, die eine weitere Optimierung der orthopädischen Eigenschaften der Sohle auf den vorgesehenen Träger erlauben. Dieses Merkmal ist sowohl in Varianten der Erfindung umsetzbar, in welchen eine vorgefertigte Bodensohle verwendet wird, als auch in Varianten, in welchen die Bodensohle ebenfalls mittels eines additiven Herstellungsverfahrens erstellt wird, wobei dann beim Übergang zwischen Bodensohle und Fußbett das weiter aufzubauende Material gewechselt werden muss.

Weiterhin kann erfindungsgemäß das Erstellen des individuellen Datensatzes ein Vermessen des entsprechenden Fußes des vorgesehenen Trägers hinsichtlich anatomischer Größen und/oder einer Druckverteilung umfassen. Hierzu kann beispielsweise auf ein digitales Scannen des entsprechenden Fußes zurückgegriffen werden, wobei zum einen geometrische Eigenschaften des Fußes wie die Länge, Breite und Umrissform sowie die Höhe und die Krümmung des Fußrückens aufgenommen werden können, andererseits kann jedoch auch durch Aufstehen des vorgesehenen Trägers auf ein entsprechend kalibriertes Messfeld eine Gewichtsverteilung beim Stehen und/oder Laufen aufgenommen und zur Erstellung des Fußbetts sowie ggf. der Gitterstruktur verwendet werden. Hierbei kann bei der Umsetzung des individuellen Datensatzes in die konkrete Form und Ausgestaltung des Fußbetts sowie ggf. der Gitterstruktur auf orthopädisches Fachwissen und geeignete Algorithmen zurückgegriffen werden, auf deren Grundlage dann bereits die Ausgestaltung des Fußbetts in einer optimierten Weise und in einem für eine additive Herstellungsvorrichtung umsetzbaren Format ausgegeben werden kann.

Weiterhin kann das erfindungsgemäße Verfahren einen Schritt eines wenigstens abschnittsweisen Einfärbens der Sohle umfassen, was in erster Linie ästhetische Gründe haben kann, jedoch andererseits auch beispielsweise durch Zugabe entsprechender Additive zu dem Färbungsmittel zu verbesserten Materialeigenschaften der Sohle führen kann.

Wenngleich in dem erfindungsgemäßen Herstellungsverfahren prinzipiell beliebige geeignete Materialien und insbesondere Kunststoffe sowie hierzu kompatible Herstellungs- und Bearbeitungstechniken verwendet werden können, so kann insbesondere das additive Herstellungsverfahren für das Fußbett und/oder die Bodensohle ein Verwenden von wenigstens einem aus einem selektiven Lasersintern, einer Stereolithographie, einem Fused-Deposition Modelling, einem Digital Light Processing und einer Multijet-Fusion umfassen.

Gemäß einem weiteren Aspekt betrifft die vorliegende Erfindung ebenfalls eine Schuhsohle, insbesondere eine einteilige Schuhsohle, welche mittels des eben beschriebenen Verfahrens sowie ggf. beliebiger ebenfalls beschriebener Weiterbildungen davon hergestellt worden ist. Diese Schuhsohle kann nun in verschiedener Weise bei einem Herstellungsverfahren eines Schuhs zum Einsatz kommen, in welchem eine Oberschale damit verbunden wird, welche den entsprechenden Fuß des Trägers an den von der Sohle abgewandten Seiten umgibt.

Hierbei kann die Oberschale beispielsweise eine flexible Bodensohle aufweisen, welche unmittelbar auf dem Fußbett der Schuhsohle flächig aufgebracht wird, oder die Oberschale kann an ihrer Unterseite wenigstens eine Durchbrechung aufweisen und wenigstens in einem Randbereich mit der Schuhsohle verbunden werden. In beiden Fällen wirkt das Fußbett der Schuhsohle weiterhin hinsichtlich ihrer Form als orthopädische Aufstandfläche für den entsprechenden Fuß des Trägers, da jeweils keine Änderung daran durch Anbringen der Oberschale hervorgerufen wird. Hierbei spricht man jeweils auch von einer 3D-Bonding-Technik, Strobble-Technik bzw. einer Cemented-Technik, wobei bei letzterer häufig noch ein Füllmaterial zum Auffüllen der Durchbrechung der Oberschale im Bereich des Fußbetts sowie das Einlegen eines Innensohlenbands durchgeführt wird.

Für beide der genannten Verbindungstechniken kann zum Anbringen der flexiblen Bodensohle auf dem Fußbett der Schuhsohle jeweils ein Verkleben, ein Vernähen und/oder ein Verbinden davon vorgesehen werden, wobei das Verbinden wiederum beispielsweise ein Ultraschall-Schweißen oder Ähnliches umfassen kann.

Für den Fall, dass die flexible Bodensohle in ihren Randbereichen hochgezogen ist, beispielsweise um einen Seitenhalt beim Tragen davon zu verbessern, so kann das Anbringen der flexiblen Bodensohle auf dem Fußbett der Schuhsohle ferner ein Befestigen der Schuhsohle an wenigstens einer Seitenwand der Oberschale umfassen, um auch hier eine erhöhte Festigkeit des so resultierenden Schuhs zu erzielen.

Weiterhin kann zur weiteren Steigerung der Effizienz des erfindungsgemäßen Verfahrens die Oberschale aus einer Menge von vorgefertigten Oberschalen gemäß der Außenmaße der Schuhsohle ausgewählt werden, sodass hier eine Konfektionierung und eine Reduzierung von Modellvarianten mit den hieraus erwachsenden Vorteilen vorgesehen werden kann. Andererseits könnte die entsprechende Oberschale jedoch auch individuell für den vorgesehenen Träger hinsichtlich anatomischer Vorgaben oder modischer Entscheidungen ausgeführt werden.

Zuletzt betrifft die vorliegende Erfindung noch einen Schuh, insbesondere einen Sportschuh, welcher mittels eines eben beschriebenen Verfahrens hergestellt worden ist.

Weitere Merkmale und Vorteile der vorliegenden Erfindung werden aus der nachfolgenden Beschreibung von Ausführungsformen davon deutlich, wenn diese zusammen mit den beiliegenden Figuren betrachtet wird. Diese zeigen im Einzelnen:
- Fig. 1:: ein Flussdiagramm, welches ein erfindungsgemäßes Verfahren zum Herstellen eines Schuhs verdeutlicht;
- Fig. 2:: eine schematische Querschnittsansicht einer erfindungsgemäßen Schuhsohle;
- Fig. 3:: eine erste Ausführungsform eines erfindungsgemäßen Schuhs in einer schematischen Querschnittsansicht; und
- Fig. 4:: eine zweite Ausführungsform eines erfindungsgemäßen Schuhs in einer schematischen Querschnittsansicht.

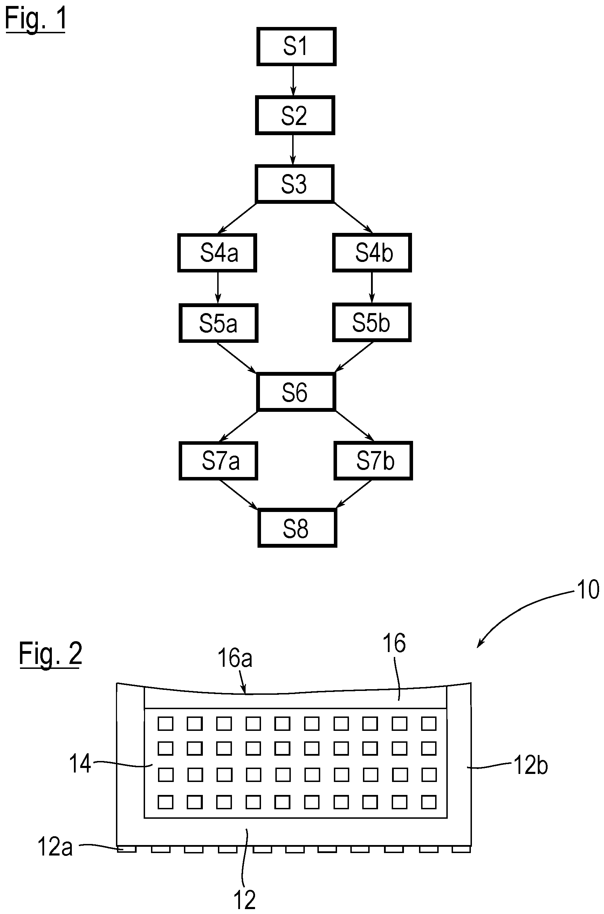

In Figur 1 ist zunächst einmal ein Flussdiagramm dargestellt, welches ein erfindungsgemäßes Verfahren zum Herstellen eines Schuhs verdeutlicht, wobei einige der Unterschritte bereits für sich ein erfindungsgemäßes Verfahren zum Herstellen einer Schuhsohle, insbesondere einer einteiligen Schuhsohle, bilden.

Zunächst einmal werden in Schritt S1 Vorarbeiten getroffen, beispielsweise der entsprechende Fuß des vorgesehenen Trägers vermessen, wozu insbesondere ein 3D-Scan und/oder eine Druckmessung durchgeführt werden können. Weiterhin kann zu diesem Zeitpunkt auch bereits das letztendlich gewünschte Schuhmodell vom entsprechenden vorgesehenen Träger ausgewählt werden, wobei es hier hinsichtlich des Modells zunächst einmal keine Einschränkungen gibt, so dass sowohl Sportschuhe oder Sneakers als auch Anzugschuhe hergestellt werden können, während ferner beispielsweise auch ein digitales Profil des Trägers mit den entsprechenden Daten angelegt werden kann.

In Schritt S2 wird dann anschließend auf Grundlage der erfassten Daten und ggf. des ausgewählten Schuhmodells mittels geeigneter Algorithmen und/oder orthopädischer Fachkenntnisse eine Sohlenstruktur hinsichtlich der gewünschten Form des Fußbetts und ggf. vorzusehender Gitterstrukturen für eine orthopädische Passform des Schuhs in seinem Sohlenbereich sowie eine erwünschte Druck- bzw. Dämpfungsverteilung bestimmt. Auf Grundlage dieser Daten kann anschließend in Schritt S3 eine für ein additives Herstellungsverfahren geeignete Steuerdatei erstellt werden, welche entweder die gesamte aufzubauende Sohle einschließlich der Bodensohle oder lediglich das auf einer anderweitig bereitgestellten Bodensohle anzupassende Fußbett betreffen kann.

Dementsprechend kann in einem Schritt S4a die Bodensohle in der beschriebenen Weise vorgefertigt bereitgestellt werden oder in einem Schritt S4b mittels eines additiven Herstellungsverfahrens auf Grundlage der bereitgestellten Steuerdaten erstellt werden. Hierbei kann in beiden Fällen die Bodensohle eine entsprechend dem Datensatz ausgewählte oder hergestellte Gitterstruktur umfassen.

Anschließend wird in einem nächsten Schritt das Fußbett für die herzustellende Schuhsohle mittels eines additiven Herstellungsverfahrens erstellt, entweder direkt auf der bereitgestellten Bodensohle in einem Schritt S5b oder unabhängig von dieser, in welchem Fall dann in einem Schritt S5a zusätzlich noch eine Verbindung zwischen dem Fußbett und der Bodensohle hergestellt werden müsste, beispielsweise durch ein großflächiges Verkleben oder Vernähen.

Zu diesem Zeitpunkt wäre das erfindungsgemäße Verfahren zum Herstellen einer Schuhsohle bereits abgeschlossen und es kann dann ausgehend von der hergestellten und evtl. noch einer Endbearbeitung zu unterziehenden Schuhsohle der darauf basierende Schuh gebildet werden. Hierzu wird in Schritt S6 eine Oberschale bereitgestellt, welche entweder eine durchgehende flexible Bodensohle aufweist oder an ihrer Unterseite wenigstens eine Durchbrechung umfasst.

Je nachdem, welche der beiden Ausführung im vorliegenden Fall gewählt wird, kann entweder in Schritt S7a ein flächiges Aufbringen der Oberschale mit der flexiblen Bodensohle auf der Schuhsohle beispielsweise mittels Verkleben oder Vernähen stattfinden oder andererseits in Schritt 7b ein Verbinden zwischen der Oberschale und der Schuhsohle lediglich in einem Randbereich davon. Der Schritt 7b kann ferner das Einfügen eines Füllmaterials in die wenigstens eine Durchbrechung der Oberschale im Bereich der Schuhsohle sowie ferner ein Anbringen eines Innensohlenbands darauf umfassen.

Wenngleich zu diesem Zeitpunkt bereits ein fertig hergestellter Schuh vorliegen kann, so können jedoch auch noch weitere Veredelungs- oder Endbearbeitungsschritte daran stattfinden, beispielsweise in Schritt S8 ein Nachprofilieren der Außensohle oder ein Härten davon, sowie ggf. ein Einfärben. Selbstverständlich könnten die entsprechenden Schritte auch schon vor Aufbringen der Oberschale an der entsprechenden Sohle durchgeführt werden, wobei die Entscheidung über den Zeitpunkt dieser Endbearbeitung letztlich relativ frei wählbar ist und lediglich von praktischen Gesichtspunkten aus getroffen werden kann.

In Figur 2 ist nun eine gemäß den entsprechenden Schritten aus Figur 1 dargestellte erfindungsgemäße Schuhsohle in einer insbesondere hinsichtlich der geometrischen Seitenverhältnisse rein schematischen Querschnittsansicht wiedergegeben und ganz allgemein mit dem Bezugszeichen 10 bezeichnet. Die Schuhsohle 10 umfasst von unten nach oben eine Bodensohle 12, welche an ihrer Unterseite mit einer Profilierung 12a versehen ist und hochgezogene Ränder 12b an allen Seiten aufweist. Innerhalb dieser Ränder 12b ist ferner eine Gitterstruktur 14 angeordnet, deren Parameter, wie beispielsweise Wandstärken und Abstände der gitterbildenden Elemente, auf den vorgesehenen Träger des entsprechenden Schuhs abgestimmt sind, um eine orthopädisch optimale Dämpfungsverteilung innerhalb der Sohle bereitzustellen.

Hierbei kann die Gitterstruktur 14 gemeinsam mit der Bodensohle 12 im selben, insbesondere additiven, Herstellungsschritt erzeugt worden sein und demzufolge auch aus demselben Material bestehen. In einer alternativen Variante könnte die Gitterstruktur 14 jedoch auch gemeinsam mit dem Fußbett 16 hergestellt worden sein und aus dem entsprechenden Material bestehen, wobei das Fußbett 16 die orthopädisch optimale komplementäre Form zum Fuß des vorgesehenen Trägers annimmt, welche gemäß den oben definierten Prinzipien erstellt worden ist, innerhalb der hochgezogenen Ränder 12b der Bodensohle 12 aufgenommen und mit dieser verbunden ist und eine durchgehende Oberseite 16a aufweist.

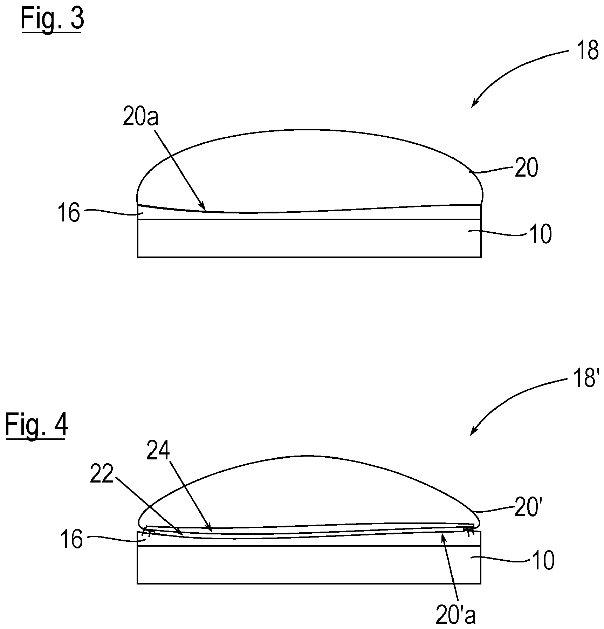

Die derart dargestellte Sohle 10, welche in der oben beschriebenen einteiligen Weise ein individuell auf einen Benutzer angepasstes Fußbett 16 umfasst, kann nun in der in Figur 3 bzw. 4 gezeigten Weise mit einer jeweiligen Oberschale 20 bzw. 20' verbunden sein, welche in Figur 3 gemäß einem sog. Strobble-Verfahren mit der jeweiligen Sohle 10 verbunden ist bzw. in Figur 4 mittels des sogenannten Cemented-Verfahrens, um einen Schuh 18 bzw. 18' zu bilden, welche in den betreffenden Figuren erneut insbesondere hinsichtlich ihrer Seitenverhältnisse und dergleichen rein schematisch dargestellt sind.

Hierbei zeigt sich in Figur 3, dass ein großflächiger Kontakt zwischen einem flexiblen Bodensohlenabschnitt 20a der Oberschale 20 und dem Fußbett 16 der Sohle 10 vorliegt, wobei die Verbindung zwischen den beiden Komponenten beispielsweise durch ein Kleben oder Vernähen hergestellt sein kann. Hierbei wölbt sich in der in Figur 3 gezeigten Querschnittsansicht die Oberschale 20 gemäß einer Form des Fußrückens des Trägers und bildet somit einen Aufnahmeraum für den entsprechenden Fuß.

Demhingegen weist die Oberschale 20' aus Figur 4 an ihrer Unterseite eine Durchbrechung 20'a auf und ist lediglich in einem Randbereich davon mit der Schuhsohle 10 verbunden, erneut beispielsweise durch ein Verkleben oder Vernähen, wie an den entsprechenden Positionen angedeutet. Um nun dennoch einen entsprechenden Tragekomfort für den vorgesehenen Träger zu bieten, ist ferner die Durchbrechung 20'a mit einem Füllmaterial 22 aufgefüllt, welches oberhalb von einem Innensohlenband 24 bedeckt ist, um eine glatte Oberseite für den Träger zu bilden, welche dennoch die Form des Fußbetts 16 der Sohle 10 abbildet.

In beiden Ausführungsformen sowohl aus Figur 3 als auch Figur 4 bildet die Form des Fußbetts 16 der Sohle 10 ein auf den vorgesehenen Träger des entstehenden Schuhs optimiertes Profil, wobei gleichzeitig ein einfacher und kostengünstiger Herstellungsprozess für eine derartige Schuhsohle 10 durch das erfindungsgemäße Verfahren etabliert worden ist.

## Patentansprüche

1. Verfahren zum Herstellen einer Schuhsohle (10) für einen Schuh (18; 18'), umfassend die folgenden Schritte:
- Erstellen eines individuellen Datensatzes für einen vorgesehenen Träger des Schuhs, welcher Informationen hinsichtlich einer gewünschten Oberflächenprofilierung eines Fußbetts (16) der Schuhsohle (10) und/oder hinsichtlich eines Festigkeitskennfelds des Fußbetts (16) der Schuhsohle (10) umfasst;
- Bereitstellen einer Bodensohle (12);
- Herstellen des Fußbetts (16) mittels eines additiven Herstellungsverfahrens anhand des individuellen Datensatzes; und
- Aufbringen des Fußbetts (16) auf die Bodensohle (12).

2. Verfahren nach Anspruch 1,
wobei das Bereitstellen der Bodensohle (12) ein Herstellen davon mittels eines additiven Herstellungsprozesses umfasst und/oder wobei das Herstellen des Fußbetts (16) mittels des additiven Herstellungsverfahrens direkt auf der Bodensohle (12) stattfindet.

3. Verfahren nach Anspruch 1 oder 2, wobei das Fußbett (16) und/oder die Bodensohle (12) abschnittsweise als eine Gitterstruktur (14) ausgebildet wird und/oder das Fußbett (16) mit einer durchgehenden Oberseite (16a) ausgebildet wird, wobei die Gitterstruktur (14) vorzugsweise ebenfalls anhand des individuellen Datensatzes hergestellt wird.

4. Verfahren nach einem der vorhergehenden Ansprüche,
ferner umfassend einen Schritt einer Endbearbeitung des Fußbetts (16), insbesondere eines Schleifens oder Fräsens.

5. Verfahren nach einem der vorhergehenden Ansprüche,
wobei die bereitzustellende Bodensohle (12) an ihrer Unterseite eine Profilierung (12a) aufweist oder in einem Schritt des Verfahrens mit einer solchen versehen wird und/oder mittels einer Veredelungstechnik haltbar und abriebsfest gemacht wird.

6. Verfahren nach einem der vorhergehenden Ansprüche,
wobei die Bodensohle (12) und das Fußbett (16) unterschiedliche Materialeigenschaften aufweisen, insbesondere hinsichtlich ihrer Festigkeit und/oder ihrer Elastizität.

7. Verfahren nach einem der vorhergehenden Ansprüche,
wobei das Erstellen des individuellen Datensatzes ein Vermessen des entsprechenden Fußes des vorgesehenen Trägers hinsichtlich anatomischer Größen und/oder einer Druckverteilung umfasst.

8. Verfahren nach Anspruch 7,
wobei das Erstellen des individuellen Datensatzes ein digitales Scannen des entsprechenden Fußes umfasst.

9. Verfahren nach einem der vorhergehenden Ansprüche,
ferner umfassend einen Schritt eines wenigstens abschnittsweisen Einfärbens der Sohle (10).

10. Verfahren nach einem der vorhergehenden Ansprüche,
wobei das additive Herstellungsverfahren für das Fußbett (16) und/oder die Bodensohle (12) ein Verwenden von wenigstens einem der folgenden Verfahren umfasst: selektives Lasersintern, Stereolithographie, Fused Deposition Modeling, Digital Light Processing und Multi Jet Fusion.

11. Schuhsohle (10), hergestellt mittels eines Verfahrens nach einem der vorhergehenden Ansprüche.

12. Verfahren zum Herstellen eines Schuhs (18; 18') mit einer Schuhsohle (10) nach dem vorhergehenden Anspruch und einer Oberschale (20; 20'),
wobei die Oberschale (20: 20') eine flexible Bodensohle (20a) aufweist, welche unmittelbar auf dem Fußbett (16) der Schuhsohle (10) flächig angebracht wird, oder
die Oberschale (20') an ihrer Unterseite wenigstens eine Durchbrechung (20'a) aufweist und wenigstens in einem Randbereich mit der Schuhsohle (10) verbunden wird.

13. Verfahren nach Anspruch 12,
wobei das Anbringen der flexiblen Bodensohle (20') auf dem Fußbett (16) der Schuhsohle (10) ein Verkleben, ein Vernähen und/oder ein Verbinden davon umfasst.

14. Verfahren nach einem der Ansprüche 12 und 13,
wobei das Anbringen der flexiblen Bodensohle (20') auf dem Fußbett (16) der Schuhsohle (10) ferner ein Befestigen der Schuhsohle (10) an wenigstens einer Seitenwand der Oberschale (20) umfasst.

15. Verfahren nach einem der Ansprüche 12 bis 14,
wobei die Oberschale (20; 20') aus einer Menge von vorgefertigten Oberschalen gemäß der Außenmaße der Schuhsohle (10) ausgewählt wird.

16. Schuh (18; 18'), insbesondere Sportschuh, hergestellt mittels eines Verfahrens nach einem der Ansprüche.
